# EUROPÄISCHE PATENTSCHRIFT

(11) **EP 1 149 652 B1**
(45) Veröffentlichungstag und Bekanntmachung des Hinweises auf die Patenterteilung: **22.12.2004**
(21) Anmeldenummer: 01810381.2
(22) Anmeldetag: 18.04.2001
(51) Int. Cl.: B23D 63/18

(54) **Verfahren und Vorrichtung zum Richten eines Sägeblattes**
Method and device for straightening a saw blade
Procédé et dispositif pour redresser une lame de scie

(30) Priorität: 26.04.2000 CH 8162000; 10.05.2000 CH 9102000
(43) Veröffentlichungstag der Anmeldung: 31.10.2001
(73) Patentinhaber: Iseli & Co. AG Maschinenfabrik, 6247 Schötz (CH)
(72) Erfinder: Iseli, Benno, 6247 Schötz (CH)
(74) Vertreter: Patentanwälte Feldmann & Partner AG

(56) Entgegenhaltungen:
- DE-A- 3 213 572
- DE-A- 4 214 784
- FR-A- 1 464 643

## Beschreibung

Die vorliegende Erfindung betrifft ein Verfahren zum Richten eines Sägeblattes, insbesondere eines endlosen Bandsägeblattes entsprechend dem Oberbegriff des Patentanspruches 1. Die Erfindung umfasst des weiteren eine Vorrichtung zur Ausübung des Verfahrens mit den Merkmalen des Patentanspruches 10.

Das Richten von Bandsägeblättern umfasst üblicherweise drei unterschiedliche Aufgaben. Damit ein Bandsägeblatt während der Führung möglichst gleichmässig belastet ist und keine Dehnungsspannungen auftreten, die zu Haarrissbildungen führen beziehungsweise zu einem Verlaufen des Bandsägeblattes, muss das Bandsägeblatt an der Rückenseite geringfügig länger sein als auf der Zähneseite. Dies ist erforderlich, weil auf der Zähneseite die Zerspanungskräfte auftreten, die an dieser Seite zu einer stärkeren Dehnung führen als an der Rückenseite. Zum gleichmässigen Verlauf ist es ferner erforderlich, in das Bandsägeblatt ein sogenanntes Spannungsprofil zu formen. Dieses Spannungsprofil besteht in einer Bombierung quer zur Längsrichtung des Bandsägeblattes, die sich über die gesamte Länge desselben erstreckt. Letztlich ist es von ausserordentlicher Bedeutung, dass das Bandsägeblatt keine Beulen oder Dellen aufweist.

Zur Durchführung dieser Tätigkeiten wird eine Vorrichtung verwendet, die in der Fachsprache als Richtzenter bezeichnet wird. Eine solche Vorrichtung umfasst Messstationen unterschiedlicher Art. Zur Messung des Spannungsprofiles wird eine Messstation in jenem Bereich angeordnet, in dem das Bandsägeblatt von einer gekrümmten Umlenkung in den ebenen Verlauf übergeht. Diese Messung ist eine Messlinie quer zur Bewegungsrichtung des Bandsägeblattes. Eine zweite Messung zur Ermittlung von Beulen oder Dellen erfolgt an einem Messpunkt, unter dem das bewegte Bandsägeblatt hindurch geführt wird. Hierbei werden sozusagen von einer fiktiven, idealen Bandebene aus Verformungen nach unten, also Dellen, bzw. nach oben, die sogenannten Beulen ausgemessen. Eine letzte Messstation dient der Wegmessung. Weil die Spannungsprofil-Messstation und die Beulen- und Dellen-Messstation nicht direkt am Ort der Korrekturverformung angeordnet sind, muss ständig gemessen werden, wann die entsprechende Verformung sich bei der entsprechenden Bearbeitungseinheit befindet. Diese Messstation wird meist durch eine Rollenabtastung realisiert. Die Messungen der Verformungen können optisch oder mit elektronischen Sensoren erfolgen. Die entsprechenden Messdaten werden an einen Rechner geliefert, der nach Massgabe dieser Grössen die entsprechenden Bearbeitungseinheiten ansteuert.

In der hier vorliegenden Erfindung interessiert nur die Bearbeitungseinheit, die sich für das Planieren von Beulen oder Dellen eignet. Da die entsprechende Bearbeitung mittels verschiedenen Rollenpaaren erfolgt, wird die entsprechende Bearbeitungseinheit auch Rolleneinheit oder Planiereinheit genannt.
Solche Planiereinheiten bestehen aus zwei Paaren von vertikal übereinander angeordneten Rollen, wobei jenes Rollenpaar, das der Korrektur von Dellen dient, unterhalb des zu korrigierenden Bandsägeblattes eine Rolle mit konvexem Querschnittsprofil und oberhalb des zu richtenden Bandsägeblattes eine Rolle mit konkavem Querschnittsprofil aufweist. Zur Korrektur von Beulen sind entsprechend diese Rollen umgekehrt angeordnet. In jenem Fall ist unterhalb des Bandsägeblattes eine Rolle mit konkavem Querschnittsprofil und oberhalb des zu richtenden Bandsägeblattes eine Rolle mit konvexem Querschnittsprofil angeordnet.

Vorrichtungen dieser Art sind in verschiedensten Ausführungsformen auf dem Markt bekannt. Rein beispielsweise wird diesbezüglich auf die DE-A-42 14 784 oder die WO 97/46335 verwiesen, wobei das Dokument DE-A-4 214 784 den nachstliegunden Stand der Technik repräsentiert. Die Zustellung der Rollen erfolgt hier hydraulisch, wobei der an die Rollen angelegte Druck im Vehältnis zur zu korrigierenden Deformation steht.

Bevor Richtzenter auf dem Markt erschienen, oder auch heute noch in Kleinbetrieben, erfolgt das Richten von Bandsägeblättern manuell durch hochbezahlte Fachleute, die die erwähnten Formgebungen mittels einem Hammer zu bewerkstelligen im Stande sind. Die heutigen Richtzenter arbeiten sehr ähnlich wie die vorgenannten Fachleute, die den Uebernamen "Saw blade Doctors" haben. Die beiden oberen Rollen der Rollenpaare werden durch hydraulische Einheiten auf und ab bewegt. Weil das zu richtende Bandsägeblatt kontinuierlich fortbewegt wird, müssen die Rollen blitzschnell auf und nieder gefahren werden. Dies ist mit einer entsprechend hohen Geräuschemission verbunden. Die Zustellung der Rollen erfolgt nach Massgabe der gemessenen Unebenheiten. Dabei wird die Zustellung im wesentlichen so gesteuert, dass der Druck proportional zur Deformation erfolgt. Weil aber die hydraulische Zustellung von vielen Faktoren abhängig ist, wie Temperatur, Viskosität und mechanische Toleranzen, und weil zudem auch die kinetische Energie der Rollenbewegung eine Auswirkung hat, erfolgt die Planierung des Bandsägeblattes in einer Art Annäherung in mehreren wiederholten Zyklen. Mit anderen Worten, pro Bandumgang wird ein linearer Weg ausgemessen und hier auch die Korrektur vorgenommen. Hierauf wird die gesamte Bearbeitungseinheit relativ zum Band verschoben, um einen vorgegebenen Betrag und die Korrektur findet wiederum statt. Bei den heute bekannten Vorrichtungen muss dieser Prozess mehrmals über die gesamte Bandbreite, folglich in vielen Umgängen, erfolgen. Entsprechend sind die heute bekannten Richtzenter sehr zeitintensiv und, wie bereits erwähnt, auch sehr lärmig. Die Präzision der heute auf den bekannten Richtzentren planierten Bandsägeblättern ist praktisch direkt abhängig von der darin investierten Richtzeit.

Es ist daher die Aufgabe der vorliegenden Erfindung ein Verfahren zu schaffen, mit einer Arbeitsmethode, welche die vorgenannten Nachteile weitgehend behebt.

Es ist des weiteren eine Aufgabe der vorliegenden Erfindung, eine Vorrichtung zu schaffen, die nach dem neuen Verfahren arbeiten kann.

Ein Verfahren, welches die obgenannte Aufgabe erfüllt, ist im Anspruch 1 beschrieben und vorteilhafte weitere Merkmale des Verfahrens sind in den abhängigen Ansprüchen 2-9 erwähnt und in der nachfolgenden Beschreibung erläutert. Eine Vorrichtung, welche nach dem erfindungsgemässen Verfahren arbeitet, ist im Anspruch 10 definiert.

In der Zeichnung ist eine erfindungsgemässe Vorrichtung dargestellt und anhand der nachfolgenden Beschreibung dieselbe und deren Arbeitsverfahren erläutert.

Es zeigt:

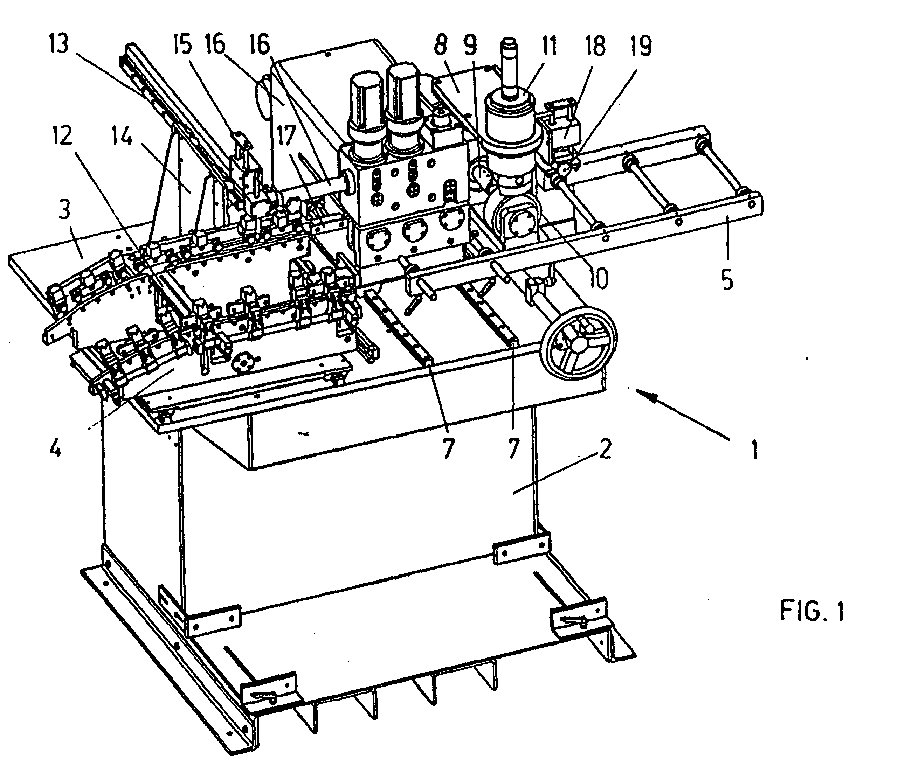

- Figur 1: ein Richtzenter ohne aufgespanntes Bandsägeblatt und

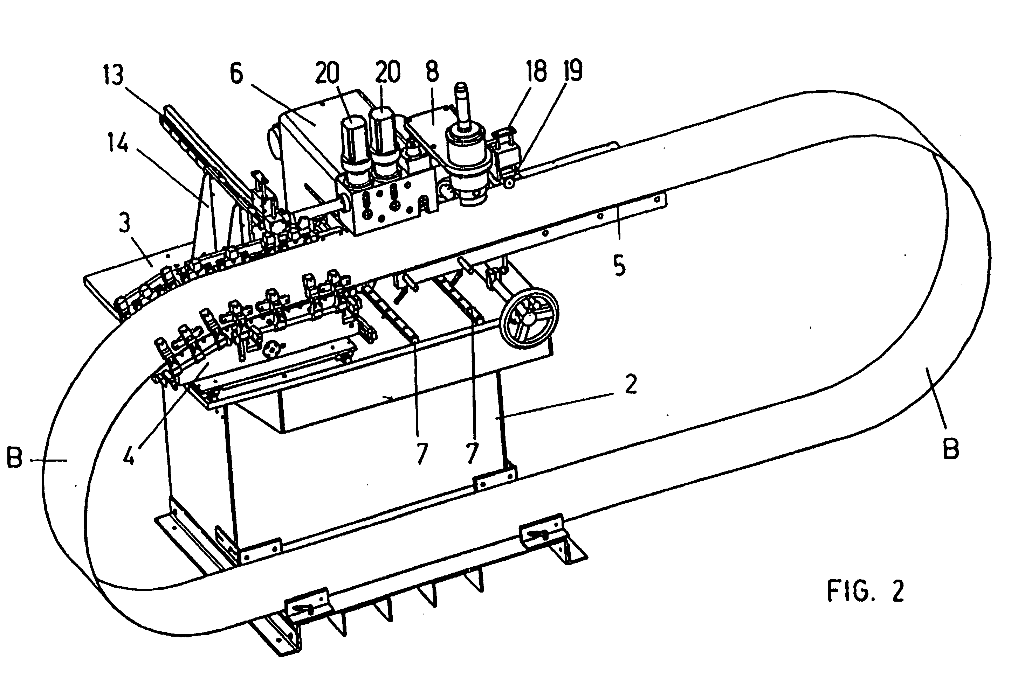

- Figur 2: dieselbe Vorrichtung mit aufgespanntem Bandsägeblatt.
- Figur 3: zeigt einen Vertikalschnitt durch eine Rolleneinheit.

In der dargestellten Ausführungsform und in der nachfolgenden Beschreibung des Verfahrens wird auf das Richten von Bandsägeblättern verwiesen. Verfahren und Vorrichtung gemäss der Erfindung können aber mit geringen Anpassungen auch für Kreissägeblätter Anwendung finden. Entsprechend wird in den Ansprüchen nur von Sägeblättern gesprochen, während in der Beschreibung nur auf das dargestellte Beispiel des Bandsägeblattes bezug genommen wird.

Mit der Bezugszahl 1 ist das Richtzentrum als Ganzes bezeichnet. Dieses steht auf einer Chassiskonstruktion 2, auf der ein Tisch 3 ruht. Das zu richtende Bandsägeblatt wird über eine Einführungsstrecke 4 und eine nachfolgende Bandführung 5 geführt. Zwischen der Einführungsstrecke 4 und der Bandführung 5 ist eine Rolleneinheit 6 angeordnet. Diese Rolleneinheit 6 ist auf Schienen 7 geführt, die eine Verschiebung der Rolleneinheit 6 senkrecht zur Bewegungsrichtung des zu richtenden Bandsägeblattes und parallel zu dessen Oberfläche ermöglichen. In Bewegungsrichtung des Bandsägeblattes ist der Rolleneinheit 6 eine Antriebseinheit 8 nachgeschaltet. Diese Antriebseinheit 8 umfasst eine getriebene Antriebswelle 9 mit einer Antriebswalze 10, auf der das Bandsägeblatt aufliegt, während von oben eine nicht sichtbare Gegendruckrolle aufliegt, deren Auflagedruck durch eine Andruckeinheit 11 gesteuert wird.

Im Bereich der Einführungsstrecke 4 wird das zu richtende Bandsägeblatt vorzugsweise in einer Klothoidenkurve von einem Umlaufradius in eine gerade Strecke übergeführt. Im Bereich des Ueberganges von der gekrümmten Bandführung in die gerade Bandführung ist eine Messstation 12 angeordnet in der Gestalt eines Messbalkens, mit dem die Bombiereung des Bandsägeblattes gemessen wird. An einem schwenkbaren Arm 13, der im weggeklappten Zustand auf einer Stütze 14 aufliegt, ist eine zweite Messstation 15 zur Messung der Unebenheiten angeordnet. Der Schwenkarm 13 ist an einer Schwenkachse 16 befestigt, die selbst wiederum fest an der Rolleneinheit 6 angeordnet ist. Hierdurch verschiebt sich die zweite Messstation 15 im gleichen Mass, wie die Rolleneinheit 6 auf den Schienen 7 verschoben wird. Die schwenkbare Anordnung der zweiten Messstation 15 erlaubt ein besseres Einführen des zu richtenden Bandsägeblattes, ohne dass dabei eine Beschädigung des Sensors an der zweiten Messstation auftritt. Ein Fühler 17 dient dazu, das bündige Anliegen des Rückens des zu richtenden Bandsägeblattes zu überwachen. Letztlich ist in Bewegungsrichtung des zu richtenden Bandsägeblattes zuhinterst noch eine Wegstrecken-Messstation 18 angeordnet, die mit einer Abtastrolle 19 auf das zu richtende Bandsägeblatt aufliegt.

Oben auf der erwähnten Rolleneinheit 6 ist über den beiden noch zu beschreibenden Rollenpaaren je ein Schrittmotor 20 angeordnet. Die beiden Schrittmotore 20 werden nach Massgabe der gemessenen Unebenheiten angesteuert. Diese Unebenheiten werden mittels der zweiten Messstation 15 eruiert. Hierzu muss der Schwenkarm 13 um ca. 180° geschwenkt werden. Die zweite Messstation arbeitet zur Messung der Unebenheiten mit entsprechend dazu geeigneten Sensoren, wobei dies optische oder piezoelektrische Sensoren sein können, ohne dass nochmals andere Sensoren, die hierzu geeignet sind, ausser Betracht kämen. Die Ausgangssignale aller Messstationen gelangen zu einem hier nicht dargestellten Rechner, der Teil des Richtzenters sein kann, oder auch ein externes Rechenzenter kann mit den Daten beliefert werden. Das Rechenzentrum speichert und verarbeitet diese Daten und steuert damit alle Antriebseinheiten des Richtzenters. Dies sind zum einen die beiden Schrittmotoren 20 und zum andern die Antriebseinheit 8 und ein hier noch nicht erläutertes Rollenpaar, welches der Formung der Bombierung des Bandsägeblattes dient.

Statt der hier erwähnten Schrittmotoren kommen, wie noch zu erwähnen ist, auch ebenso verbreitete Servomotoren in Frage.

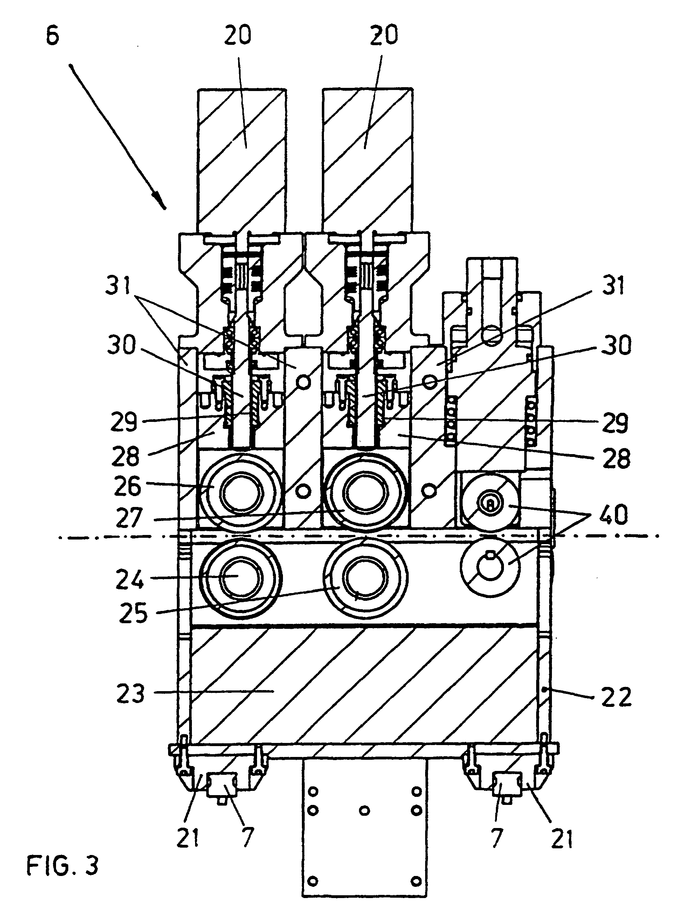

In der Figur 3 ist ein Vertikalschnitt durch die Rolleneinheit 6 parallel zur Bewegungsrichtung des zu richtenden Bandsägeblattes dargestellt. Die gesamte Einheit ist auf den bereits zuvor erwähnten Schienen 7 verschiebbar angeordnet. Hierzu sind Gleitschuhe 21 vorgesehen, die mit dem Gehäuse 22 der Einheit 6 verbunden sind. Innerhalb des Gehäuses 22 ist ein äusserst massiv gestalteter Unterbau 23 angeordnet, in dem zwei fluchtend hintereinander in Bewegungsrichtung des darüber laufenden, zu richtenden Bandsägeblattes, Rollen 24 und 25 gelagert sind. Ueber diesen beiden Rollen sind zwei obere Rollen 26,27 angeordnet. Hierdurch ergeben sich zwei Rollenpaare 24,26 und 25,27. Die Achsen eines Rollenpaares verlaufen parallel vertikal übereinander. Die Achsen der fliegenden Rollen 26,27 sind in Lagerblöcken 28 gelagert. In diesen Lagerblöcken 28 sind Gewindehülsen 29 eingelassen. Diese Gewindehülsen 29 sind mittels Schrauben in den Lagerblöcken 28 gehalten. In jeder Gewindehülse 29 greift eine passende Gewindespindel 30 ein, die je von einem der beiden Schrittmotoren 20 getrieben wird.

Die bereits erwähnte, hier nicht dargestellte Steuerung sendet entsprechende Steuersignale an die beiden Schrittmotore 20, welche demgemäss die Gewindespindeln 30 um ein entsprechendes Mass verdrehen. In der Folge werden die Lagerblöcke 28 nach oben beziehungsweise nach unten verschoben. Folglich bewegen sich die beiden oberen Rollen 26,27 in Richtung zu ihren Gegenrollen 24,25. Das erste Rollenpaar 24,26 dient der Glättung von Unebenheiten, die bezüglich der idealen Bandebene I nach unten vorstehen, während das zweite Rollenpaar 25,27 der Glättung von Unebenheiten dient, die bezüglich der idealen Bandebene I nach oben vorstehen. Dementsprechend ist beim ersten Rollenpaar die untere Rolle mit einer konvexen Laufebene, die obere Rolle 26 mit einer konkaven Lauffläche versehen. Im zweiten Rollenpaar 25,27 ist die Anordnung genau umgekehrt. Hier ist die untere Rolle 25 mit einer konkaven Lauffläche ausgestaltet, während die entsprechende obere Rolle 27 mit einer konvexen Lauffläche ausgestaltet ist.

Die beiden Lagerblöcke 28 sind zwischen Lagerwangen 31 allseitig geführt. Die Führung entspricht folglich einem Kolben in einem Zylinder.

Den beiden der Glättung dienenden Rollenpaaren 24,26 und 25,27 folgt ein weiteres Rollenpaar 40, bei dem die untere Rolle fest und die obere Rolle unter Federdruck lagert. Dieses Rollenpaar kann entweder dem Antrieb des durchzuführenden Bandsägeblattes dienen, wozu beide gekoppelt antreibbar sind, wie hier dargestellt, oder aber, wie zuvor beschrieben, kann hier auch das Rollenpaar vorhanden sein, das der Formung der Bombierung des Sägeblattes dient. Im einen Fall sind die beiden Rollen mit flachen Laufflächen gestaltet, im anderen Fall sind die Laufflächen beider Rollen bombiert gestaltet.

Das wesentliche Prinzip der Erfindung besteht darin, dass das zu richtende Bandsägeblatt mittig zur Idealebene I durch die Rolleneinheit 6 hindurch geführt wird und gleichzeitig die Rollen praktisch aufliegend auf das Bandsägeblatt sind. Kommt eine Delle in den Bereich des ersten Rollenpaares 24,25, so wird der Lagerbock mit der darin gelagerten oberen Rolle 26 proportional zur gemessenen Dellentiefe nach unten bewegt. In gleicher Art wird im Falle, dass sich eine Beule im Bereich des zweiten Rollenpaares 25,27 befindet, der entsprechende Lagerblock 28 mit der oberen Rolle 27 nach unten bewegt. Auch hier erfolgt die Bewegung proportional zur gemessenen Unebenheit. Da das Bandsägeblatt selbstverständlich eine gewisse Eigenelastizität aufweist, muss die entsprechende Bewegung der oberen Rollen 26,27 um ein gewisses Mass grösser sein als die effektiv gemessene Unebenheit. Beispielsweise kann bei einer Delle mit einer Tiefe von 20 Hundertstelmillimeter die obere Rolle 26 um beispielsweise 25 Hundertstelmillimeter nach unten bewegt werden. Das Proportionalitätsverhältnis ist wesentlich beeinflusst durch die Bandsägeblattdicke und das Material, aus dem dieses gefertigt ist. Entsprechend der Abweichungsdistanz der Oberfläche des Bandsägeblattes von der Idealebene I über den Verlauf der Unebenheit erfolgt eine entsprechende Gegenbewegung der jeweiligen oberen Rolle 26,27.

Im Gegensatz zu bekannten Verfahren wird folglich nicht mehr mit einer Annäherung gearbeitet, sondern die Unebenheiten werden direkt auf das gewünschte Endmass gedrückt. Entsprechend haben Versuche gezeigt, dass in der Mehrzahl bei allen Bandsägeblättern ein einziger Zyklus genügt, um das Bandsägeblatt optimal zu glätten. Selbstverständlich ist es jedoch möglich, diese Zyklen mehrfach zu wiederholen und dabei die Verschiebedistanz der Rollenpaare senkrecht zur Bewegungsrichtung in unterschiedlichen Abständen vom Bandsägerücken durchzuführen. Da die Zuführungsbewegungen immer von der Bandoberfläche aus anliegend erfolgen und auch weil die Schrittmotore 20 sehr schnell reagieren und geräuscharm arbeiten, tritt kein Hämmergeräusch auf, wie dies bei Maschinen des Standes der Technik erfolgt.

Obwohl in der dargestellten Ausführungsform mit Schrittmotoren gearbeitet wird und dies auch bevorzugt wird, kann jedoch die Bewegung der Lagerblöcke 28 beziehungsweise der oberen Rollen 26,27 auch mittels hydraulischer Zustellung erfolgen. Eine solche Lösung verlangt jedoch eine volumetrische Hydraulikölzustellung. Dies ist jedoch wesentlich aufwendiger als die mechanische Zustellung mittels Schrittmotoren, wie sie vorgehend beschrieben worden ist.

## Patentansprüche

1. Verfahren zum Richten eines Sägeblattes, insbesondere eines endlosen Bandsägeblattes (B), bei dem das Sägeblatt oberhalb eines in Bewegungsrichtung angeordneten Tisches (3) geführt und fortlaufend der Vorschubweg desselben gemessen wird, wobei nach einer Messung der Ebenheit des Bandsägeblattes dieses an einer Rolleneinheit (6) entlang geführt wird, die senkrecht zur Bewegungsrichtung, jedoch parallel zur Ebene, in der das Sägeblatt (B) läuft, verstellbar geführt ist, und hier mittels zwei Paaren (24,26; 25,27) von vertikal übereinander angeordneten Rollen entsprechend der gemessenen Unebenheiten geglättet wird, und dass die beiden Rollenpaare (24,26; 25,27) aus einer unteren fest angeordneten Rolle (24,25) und einer oberen beweglich geführten Rolle (26,27) besteht, wobei die beiden oberen Rollen (26,27) direkt proportional zu den entsprechenden von einer idealen Blattebene (I), (Idealebene), abweichenden gemessenen Unebenheiten zugestellt werden, **dadurch gekennzeichnet, dass** die Zustellung der beweglichen Rollen mittels Schritt- oder Servomotoren direkt proportional zu den gemessenen Unebenheiten um einen der Höhe oder Tiefe der Unebenheiten proportionalen Weg erfolgt, während in Bereichen ohne Deformationen beide Rollen (24,26; 25,27) jedes Rollenpaares auf dem Sägeblatt (B) aufliegend geführt werden.

2. Verfahren nach Anspruch 1, **dadurch gekennzeichnet, dass** die von einer idealen Blattebene (I) nach unten und oben abweichenden Unebenheiten abgetastet (15) werden und in einem Rechner zu entsprechenden Steuersignalen umgewandelt werden, mittels denen je eine Zustelleinheit (20) pro Rollenpaar (24,26; 25,27) angesteuert wird, wobei das eine Rollenpaar bei einer Abweichung von der Idealebene (I) nach unten und das andere Rollenpaar bei einer Abweichung von der Idealebene (I) nach oben um eine proportionale Wegstrecke zu den gemessenen Abweichungen auf einander zu bewegt werden, sobald das Sägeblatt (B) um die entsprechende Wegstrecke von der Messstelle (15) bis zum entsprechenden zu aktivierenden Rollenpaar bewegt worden ist.

3. Verfahren nach Anspruch 1, **dadurch gekennzeichnet, dass** die Wegstreckenmessung (18) in Bewegungsrichtung nach der Rolleneinheit (6) durchgeführt wird.

4. Verfahren nach Anspruch 1, **dadurch gekennzeichnet, dass** die Messung der Unebenheiten (15) entlang einer Linie parallel zum Sägeblattrücken beziehungsweise zur Sägeblattperipherie durchgeführt wird, bis die gesamte Sägeblattlänge abgemessen ist, worauf die Rolleneinheit (6) jeweils um eine eingebbare Streckeneinheit senkrecht zur Sägeblattbewegungsrichtung verschoben (7) wird, bis die gesamte Sägeblattfläche bearbeitet worden ist, womit ein Richtzyklus beendet ist.

5. Verfahren nach Anspruch 4, **dadurch gekennzeichnet, dass** der Zyklus nur einmal durchgeführt wird.

6. Verfahren nach Anspruch 4, **dadurch gekennzeichnet, dass** der Zyklus mehrmals durchgeführt wird.

7. Verfahren nach Anspruch 6, **dadurch gekennzeichnet, dass** die eingebbaren Streckeneinheiten der Verschiebung der Rolleneinheit (6) bei allen Zyklen gleichbleibend gehalten wird.

8. Verfahren nach Anspruch 6, **dadurch gekennzeichnet, dass** die eingebbaren Streckeneinheiten der Verschiebung der Rolleneinheit bei jedem Zyklus geändert werden.

9. Verfahren nach Anspruch 1, **dadurch gekennzeichnet, dass** die Zustellbewegung der oberen Rollen (26,27) um eine vorgebbare Prozentzahl grösser ausgeführt wird, als die effektiv gemessene (15) Unebenheit des Sägeblattes (B) von der Idealebene (I).

10. Vorrichtung zum Richten eines Sägeblattes, insbesondere eines endlosen Bandsägeblattes (B), bei dem das Sägeblatt oberhalb eines in Bewegungsrichtung angeordneten Tisches (3) geführt ist und fortlaufend der Vorschubweg desselben gemessen wird, mit einer Messstation (12) zur Messung der Ebenheit des Bandsägeblattes und einer Rolleneinheit (6), in der das Sägeblatt (B) läuft, und dass zwei Rollenpaare (24,26; 25,27) aus je einer unteren fest angeordneten Rolle (24,25) und einer oberen beweglich geführten Rolle (26,27) besteht, die entsprechend bei von einer idealen Blattebene (I) (Idealebene) abweichenden gemessenen Unebenheiten zustellbar sind, während in Bereichen ohne Deformationen beide Rollen (24,26; 25,27) jedes Rollenpaares auf dem Sägeblatt (B) aufliegend führbar sind, **dadurch gekennzeichnet, dass** die beweglichen Rollen (26,27) in Lagerblöcken (28) verschiebbar gelagert sind und die Verschiebung dieser Blöcke mittels Schritt- oder Servomotoren direkt proportional zu den gemessenen Unebenheiten um einen der Höhe oder Tiefe der Unebenheiten proportionalen Weg erfolgt.

11. Vorrichtung nach Anspruch 10, **dadurch gekennzeichnet, dass** eine Wegstrecken-Messstation (18) in Bewegungsrichtung nach der Rolleneinheit (6) angeordnet ist.

12. Vorrichtung nach Anspruch 11, **dadurch gekennzeichnet, dass** die Messung der Unebenheiten mittels einer zweiten Messstation (15) entlang einer Linie parallel zum Sägeblattrücken beziehungsweise zur Sägeblattperipherie durchführbar ist und die Rolleneinheit (6) jeweils nach Durchlaufen einer Sägeblattlänge um eine eingebbare Streckeneinheit senkrecht zur Sägeblattbewegungsrichtung auf Schienen (7) verschiebbar ist, bis die gesamte Sägeblattfläche bearbeitet worden ist, womit ein Richtzyklus beendet ist.

13. Vorrichtung nach Anspruch 11, **dadurch gekennzeichnet, dass** beide oberen Rollen (24,26; 25,27) jedes Rollenpaares je mit ihrer Achse im Lagerblock (28) gehalten sind, der in einer Vertikalführung (31) geführt und mittels einer Gewindespindel (30) von dem jeweiligen darüber angeordneten Schritt- oder Servomotor (20) auf und ab bewegbar ist.

## Claims

1. A method for straightening a saw blade, in particular an endless band-saw blade (B) with which the saw blade is guided above a table (3) arranged in the movement direction and the advance path of this is continuously measured, wherein after a measurement of the evenness of the band-saw blade this is guided along a roller unit (6) which is adjustably guided perpendicular to the movement direction, but parallel to the plane in which the saw blade (B) runs, and here by way of two pairs (24, 26; 25, 27) of rollers arranged vertically above one another one smooths (levels) according to the measured unevennesses, and that the two roller pairs (24, 26; 25, 27) consist of a lower rigidly arranged roller (24, 25) and an upper movably guided roller (26, 27), wherein the two upper rollers (26, 27) are advanced directly proportionally to the respective measured unevenesses deviating from an ideal blade plane (I), (ideal plane), **characterised in that** the advance of the movable rollers is effected by way of stepper motors or servo-motors directly proportionally to the measured unevenesses by a distance (path) which is proportional to the height or depth of the unevennesses, whilst in regions without deformations both rollers (24, 26; 25,27) of each roller pair are guided resting (lying) on the saw blade (B).

2. A method according to claim 1, **characterised in that** the unevenesses deviating downwards and upward from an ideal blade plane (I) are scanned (15) and in a computer are converted into corresponding control signals by way of which in each case one advance unit (20) per roller pair (24, 26; 25,27) is activated, wherein the one roller pair with a deviation from the ideal plane (I) downwards and the other roller pair with a deviation from the ideal plane (I) upwards are moved towards one another by a proportional path distance to the measured deviations as soon as the saw blade (B) has been moved by the respective path distance from the measuring location (15) up to the corresponding roller pair to be activated.

3. A method according to claim 1, **characterised in that** the path distance measurement (18), in the movement direction, is carried out after the roller unit (6).

4. A method according to claim 1, **characterised in that** the measurement of the unevennesses (15) along a line parallel to the saw blade back or to the saw blade periphery is carried out until the whole saw blade length has been gauged (measured), whereupon the roller unit (6) in each case is displaced (7) by a inputtable distance unit perpendicular to the saw blade movement direction until the whole saw blade surface has been machined, with which a straightening cycle is completed.

5. A method according to claim 4, **characterised in that** the cycle is only carried out once.

6. A method according to claim 4, **characterised in that** the cycle is carried out several times.

7. A method according to claim 6, **characterised in that** the inputtable distance units of the displacement of the roller unit (6) is held constant with all cycles.

8. A method according to claim 6, **characterised in that** the inputtable distance units of the displacement of the roller units are changed with each cycle.

9. A method according to claim 1, **characterised in that** the advance movement of the upper rollers (26, 27), with a percentage increase which may be inputted, is carried out to a greater extent than the effectively measured (15) unevenness of the saw blade (B) from the ideal plane (I).

10. A method for straightening a saw blade, in particular an endless band-saw blade (B) with which the saw blade is guided above a table (3) arranged in the movement direction and the advance path of this is continuously measured, with a measuring station (12) for measuring the evenness of the band saw blade, and with a roller unit (6) in which the saw blade (B) runs, and wherein two roller pairs (24, 26; 25, 27) consist in each case of a lower rigidly arranged roller (24, 25) and an upper movably guided roller (26, 27), which given measured unevenesses deviating from an ideal blade plane (I) (ideal plane) may be accordingly advanced, whilst in regions without deformation both rollers (24, 26; 25, 27) of each roller pair may be guided resting (lying) on the saw blade (B), **characterised in that** the movable rollers (26, 27) are displaceably mounted in bearing blocks (28) and the displacement of these blocks is effected by way of stepper motors or servo motors directly proportionally to the measured unevenesses by a distance which is proportional to the height or depth of the unevennesses

11. A device for carrying out the method according to claim 10, **characterised in that** a path distance measurement station (18), in the movement direction, is arranged after the roller unit (6).

12. A device according to claim 11, **characterised in that** the measurement of the unvennesses may be carried out by way of a second measurement station (15) along a line parallel to the back of the saw blade or to the periphery of the saw blade, and the roller unit (6) in each case after running through a length of the saw blade may be displaced on rails (7) by an inputtable path (distance) unit perpendicular to the movement direction of the saw blade until the whole surface of the saw blade has been machined, with which the straightening cycle is completed.

13. A device according to claim 11, **characterised in that** both upper rollers (24,26; 25,27) of each roller pair in each case with their arbor are held in a bearing block (28) which is guided in a vertical guide (31) and by way of a threaded spindle (30) is movable up and down by the respective stepper motor or servo-motor (20) arranged thereabove.

## Revendications

1. Procédé pour redresser une lame de scie, en particulier une lame de scie à ruban (8) sans fin, avec laquelle la lame de scie est guidée au-dessus d'une table (3) arrangée dans le sens du mouvement et la trajectoire de déplacement en avant de la lame de scie est mesurée de manière continue, auquel cas, après une mesure de la planéité de la lame de scie à ruban, cette dernière est guidée le long d'une unité à rouleaux (6), laquelle est guidée de façon à pouvoir être réglée, perpendiculairement par rapport au sens du mouvement, mais toutefois parallèlement par rapport au plan dans lequel la lame de scie (B) passe, et ici la lame de scie à ruban est lissée, à l'aide de deux paires (24, 26; 25, 27) de rouleaux superposés verticalement, conformément aux non-planéités mesurées et que les deux paires de rouleaux (24, 26; 25, 27) se composent d'un rouleau (24, 25) arrangé en bas et étant fixe et d'un rouleau (26, 27) guidé en haut et étant mobile, auquel cas les deux rouleaux supérieurs (26, 27) sont actionnés directement de façon proportionnelle aux non-planéités correspondantes, ces non-planéités étant mesurées par rapport à une déviation d'un plan de lame idéal (I), (plan idéal),
**caractérisé par le fait que** l'actionnement des rouleaux mobiles a lieu à l'aide d'un moteur pas à pas ou servomoteur directement de façon proportionnelle aux non-planéités mesurées d'une trajectoire proportionnelle à la hauteur ou la profondeur des non-planéités, tandis que, dans les secteurs sans déformations, les deux rouleaux (24, 26; 25, 27) de chaque paires de rouleaux sont guidés sur la lame de scie (B) de façon à y être appuyés.

2. Procédé selon la revendication 1, **caractérisé par le fait que** les non-planéités, déviant vers le haut et vers le bas par rapport à un plan de lame idéal (I), sont détectées (15) et sont converties dans des signaux de commande correspondants dans un ordinateur, à l'aide desquels une unité d'avance (20) par paire de rouleaux (24, 26; 25, 27) est commandée, auquel cas une paire de rouleaux, lors d'une déviation vers le bas par rapport au plan idéal (I), et l'autre paire de rouleaux, lors d'une déviation vers le haut par rapport au plan idéal (I), sont bougées l'une vers l'autre et cela d'une distance proportionnelle par rapport aux déviations mesurées, aussitôt que la lame de scie (B) a été déplacée de la distance correspondante du point de mesure (15) jusqu'à la paire de rouleaux correspondant à activer.

3. Procédé selon la revendication 1, **caractérisé par le fait que** la mensuration de la distance parcourue (18) est effectuée dans un sens du mouvement d'après l'unité à rouleaux (6).

4. Procédé selon la revendication 1, **caractérisé par le fait que** la mensuration des non-planéités (15) est effectuée le long d'une ligne, parallèlement au dos de la lame de scie, respectivement périphérie de la lame de scie, jusqu'à ce que l'ensemble de la longueur de la lame de scie soit mesurée, sur quoi l'unité à rouleaux (6) est déplacée (7), respectivement d'une unité de distance susceptible d'être entrée, perpendiculairement au sens du mouvement de la lame de scie, jusqu'à ce que l'ensemble de la surface de la lame de scie ait été travaillée, avec quoi un cycle de dressage est terminé.

5. Procédé selon la revendication 4, **caractérisé par le fait que** le cycle n'est exécuté qu'une seule fois.

6. Procédé selon la revendication 4, **caractérisé par le fait que** le cycle est exécuté plusieurs fois.

7. Procédé selon la revendication 6, **caractérisé par le fait que** l'unité de distance, susceptible d'être entrée, du déplacement de l'unité à rouleaux (6) est maintenue constante avec tous les cycles.

8. Procédé selon la revendication 6, **caractérisé par le fait que** l'unité de distance, susceptible d'être entrée, du déplacement de l'unité à rouleaux (6) est changée lors de chaque cycle.

9. Procédé selon la revendication 1, **caractérisé par le fait que** le mouvement d'avance des rouleaux supérieurs (26, 27) est exécuté d'un pourcentage, susceptible d'être donné, et plus grand que la non-planéité effectivement mesurée (15) de la lame de scie (B) par rapport au plan idéal (I).

10. Dispositif pour redresser une lame de scie, en particulier une lame de scie à ruban (B) sans fin, avec laquelle la lame de scie est guidée au-dessus d'une table (3) arrangée dans le sens du mouvement et la trajectoire de déplacement en avant de la lame de scie est mesurée de manière continue, avec une centrale de mesure (12) pour la mensuration de la planéité de la lame de scie à ruban et une unité à rouleaux (6) dans laquelle la lame de scie (B) passe, et que les deux paires de rouleaux (24, 26; 25, 27) se composent chacun d'un rouleau (24, 25) arrangé en bas et étant fixe et d'un rouleau (26, 27) guidé en haut et étant mobile, qui sont susceptibles d'être actionnés lors de non-planéités mesurées déviant par rapport à un plan de lame (I) idéal (plan idéal), tandis que, dans les secteurs sans déformations, les deux rouleaux (24, 26; 25, 27) de chaque paire de rouleaux. sont susceptibles d'être guidés sur la lame de scie (B) de façon à y être appuyés,
**caractérisé par le fait que** les rouleaux mobiles (26, 27) sont logés de façon à pouvoir être déplacés dans des blocs de logement (28) et le déplacement de ces blocs a lieu à l'aide d'un moteur pas à pas ou servomoteur directement de façon proportionnelle aux non-planéités mesurées d'une trajectoire proportionnelle à la hauteur ou la profondeur des non-planéités.

11. Dispositif selon la revendication 10, **caractérisé par le fait qu'**une station de mesure de distance parcourue (18) est arrangée dans le sens de mouvement d'après l'unité à rouleaux (6).

12. Dispositif selon la revendication 11, **caractérisé par le fait que** la mensuration des non-planéités est susceptible d'être exécutée à l'aide d'une deuxième station de mesure (15) le long d'une ligne, parallèlement au dos de la lame de scie, respectivement à la périphérie de la lame de scie, et l'unité à rouleaux (6) est susceptible d'être déplacée sur des rails (7) respectivement selon le passage d'une longueur de lame de scie d'une unité de distance, susceptible d'être donnée, perpendiculairement par rapport au sens de mouvement de la lame de scie, jusqu'à ce que l'ensemble de la surface de la lame de scie ait été travaillée, avec quoi un cycle de dressage est terminé.

13. Dispositif selon la revendication 11, **caractérisé par le fait que** les deux rouleaux supérieurs (24, 26; 25, 27) de chaque paire de rouleaux sont retenus chacun avec leur axe dans le bloc de logement (28), lequel est guidé dans un guidage vertical (31) et, à l'aide d'une broche filetée (30), il est susceptible d'être bougé vers le haut et vers le bas à partir du moteur pas à pas ou servomoteur (20) monté au dessus de la respective broche filetée.
